# EUROPEAN PATENT APPLICATION

(11) **EP 4 654 052 A1**
(43) Date of publication of application: **26.11.2025**
(21) Application number: 25177318.0
(22) Date of filing: 19.05.2025
(51) Int. Cl.: G06F 21/31, G06F 21/60

(54) **AUTHENTICATION PROCESSING PROGRAM ON AN IMAGE PROCESSING APPARATUS RECEIVING A VERIFICATION COMMAND TO NOT RESET THE FAILURE COUNTER ON POSITIVE AUTHENTICATION**

(30) Priority: 20.05.2024 JP 2024081946
(71) Applicant: Brother Kogyo Kabushiki Kaisha, Nagoya, Aichi 467-8561 (JP)
(72) Inventor: Daisuke, Matsumoto, Nagoya, 467-8562 (JP)
(74) Representative: J A Kemp LLP

(57) **Abstract**

Every time authentication in steps using user information fails, a controller 210 of a multifunction peripheral 200 counts the cumulative failures N. In a case where the count of the cumulative failures N equals or exceeds a predetermined threshold, the controller 210 restricts the successful authentication. On the other hand, in a case where authentication is successful after the cumulative failures N has been incremented, the controller 210 initializes the cumulative failures N in a case where a specific condition is not satisfied, whereas the controller 210 maintains the cumulative failures N without initializing the cumulative failures N, in a case where the specific condition is satisfied.

## Description

### TECHNICAL FIELD

The present invention relates to an image processing apparatus and an authentication processing program each of which includes a function of authenticating user information with respect to access from an external device.

### BACKGROUND ART

A known information processing system has a lockout function wherein the information processing system authenticates a user, and the information processing system rejects the authentication by the user in a case where the number of authentication failures of the user becomes a predetermined number of times or more, as described, for example, in Japanese Patent Application Laid-Open No. JP 2015-72527.

### SUMMARY

### Problem to be solved by the invention

A technique is presumed wherein, similarly to the above-described known technique, the lockout is performed in accordance with the count of the authentication failures which has reached the predetermined number of times. In this case, the count of the authentication failures is usually reset in a case where the authentication succeeds by access from a user having due authorization before the count of the authentication failures reaches the predetermined number of times.

However, such a case is also presumed that the authentication succeeds in a short interval by the access from a terminal of the user with the due authorization, for example, in a case where the polling is performed by the terminal of the user with the due authorization. In such a case, the count of the authentication failures is initialized or reset each time the authentication succeeds. Therefore, even in a case where the information processing system is attacked by a malicious third person, for example, with a brute force attack on the password, the lockout does not function properly, and the effectiveness of the lockout might be lowered, in some cases.

An object of the present invention is to provide an image processing apparatus capable of improving the effectiveness of the function restricting the success of authentication.

### Solution to the problem

To achieve the above-described object, an image processing apparatus according to the present invention includes an image processing part and a controller.

The controller executes:
an information obtaining process of obtaining first user information;
an authentication process of performing authentication using the first user information obtained in the information obtaining process;
a counting process of incrementing the number of authentication failures when an authentication failure occurs in the authentication process;
a restricting process of restricting successful authentication in a case where the number of authentication failures equals or exceeds a predetermined threshold; and
a number controlling process, wherein
in a case where authentication using the first user information obtained in the information obtaining process is successful after the number of authentication failures has been incremented in the counting process, wherein the number of authentication failures has a value less than the predetermined threshold, the controller executes:
   in a case where a predetermined specific condition is not satisfied, initializing the number of authentication failures; and
   in a case where the predetermined specific condition is satisfied, retaining the number of authentication failures.

In the present invention, the controller of the image processing apparatus executes the information obtaining process so as to obtain the first user information. The controller executes the authentication process and executes the authentication using the obtained first user information. In a case where the authentication fails, the controller executes the counting process and counts the number of authentication failures. In a case where the authentication fails repeatedly, the count of the authentication failures increases, and in a case where the counted number of authentication failures equals or exceeds the predetermined threshold, the controller executes the restricting process to thereby restrict the successful authentication.

In a case where the authentication using the obtained first user information succeeds in a state that the number of authentication failures is being counted, namely, in a state that the authentication has failed but the successful authentication is not restricted yet, the controller performs either one of different processes depending on whether the previously determined specific condition is satisfied or not.

In a case where the specific condition is not satisfied, the controller initializes or resets the number of authentication failures counted as described above in the number controlling process, in a similar manner to the above-described known technique. In a case where the specific condition is satisfied, the controller maintains the number of authentication failures counted as described above, without initializing the counted number of authentication failures, unlike the above-described known technique.

In the present invention, by setting the specific condition appropriately, such a configuration is possible wherein the number of authentication failures is not reset even in a case where the authentication succeeds by the user with the due authorization immediately before the image processing apparatus is attacked by the malicious third person. In a case where the malicious third person attacks the image processing apparatus, the failure of the authorization is repeated, and thus such a possibility that the number of authentication failures reaches the threshold becomes high. Accordingly, the controller executes the restricting process to thereby restrict the successful authentication.

According to the present invention, the effectiveness of the function of restricting the success of authentication can be improved.

### Effect of the invention

According to the present invention, the effectiveness of the function of restricting the success of authentication can be improved.

### BRIEF DESCRIPTION OF DRAWINGS

FIG. 1 is a block diagram depicting an example of the overall configuration of a print control system.
FIG. 2 is a block diagram depicting an example of the configuration of an operation terminal.
FIG. 3 is a diagram indicating an example of information transmittance and reception behavior in the print control system
FIGs. 4A to 4C depict a sequence chart indicating an example of a control procedure.
FIGs. 5A and 5B depict a sequence chart indicating an example of a control procedure.
FIGs. 6A and 6B depict a sequence chart indicating the example of the control procedure.
FIGs. 7A and 7B depict a sequence chart indicating the example of the control procedure.
FIG. 8 is a diagram indicating an example of the configuration of data of a print job.
FIG. 9 is a diagram indicating an example of the content of a memory table of the multifunction peripheral.

### DESCRIPTION OF THE EMBODIMENT

An embodiment of the present invention will be described with reference to the drawings. In the present embodiment, although a multifunction peripheral which prints and outputs an image based on image data will be described as an example of an image outputting apparatus which outputs an image, the image outputting apparatus is not limited to being the multifunction peripheral.

### Overall Configuration of Print Control System

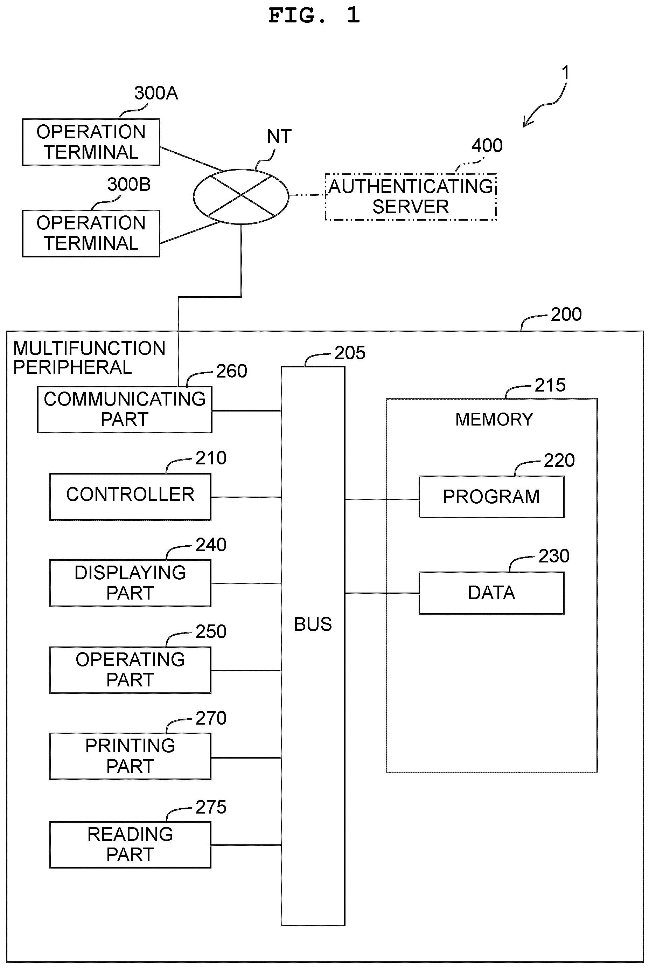

FIG. 1 depicts an example of the overall configuration of a print control system 1 according to the present embodiment. As depicted in FIG. 1, the print control system 1 has a multifunction peripheral 200 and at least one operation terminal which is, in this example, two operation terminals 300A and 300B. In the following description, in a case where the operation terminals 300A and 300B are not distinguished, the operations terminals 300A and 300B are collectively referred to as simply "operation terminal 300". The multifunction peripheral 200 and the operation terminal 300 can communicate with each other via an appropriate network NT. The operation terminal 300 and the multifunction peripheral 200 are also capable of communicating with each other via local communication, e.g., LAN, rather than via the network NT. Note that an authenticating server 400 connected to the network NT will be described later.

### Multifunction Peripheral

The multifunction peripheral 200 is possessed, for example, by a user who is, in this example, an authorized user with due authorization for executing printing. The multifunction peripheral 200 executes printing of an image based on print data. The multifunction peripheral 200 also performs reading with respect to a reading object and generates an image corresponding to the reading object. The multifunction peripheral 200 is an example of the image processing apparatus. The multifunction peripheral 200 has, for example, a controller 210, a memory 215, a displaying part 240, an operating part 250, a communicating part 260, a printing part 270, and a reading part 275. The printing part 270 is an example of the image forming part and is also an example of an image processing part. The reading part 275 is also an example of the image processing part. The controller 210, the memory 215, the displaying part 240, the operating part 250, the communicating part 260, and the printing part 270 are connected to one another, via a bus 205, to be capable of transmitting and receiving information.

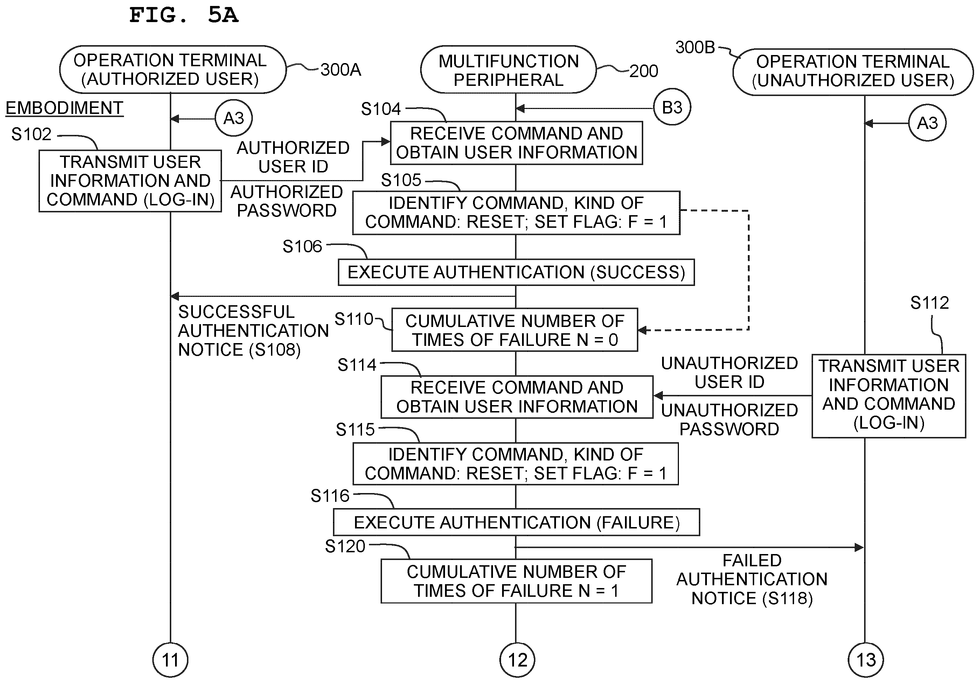

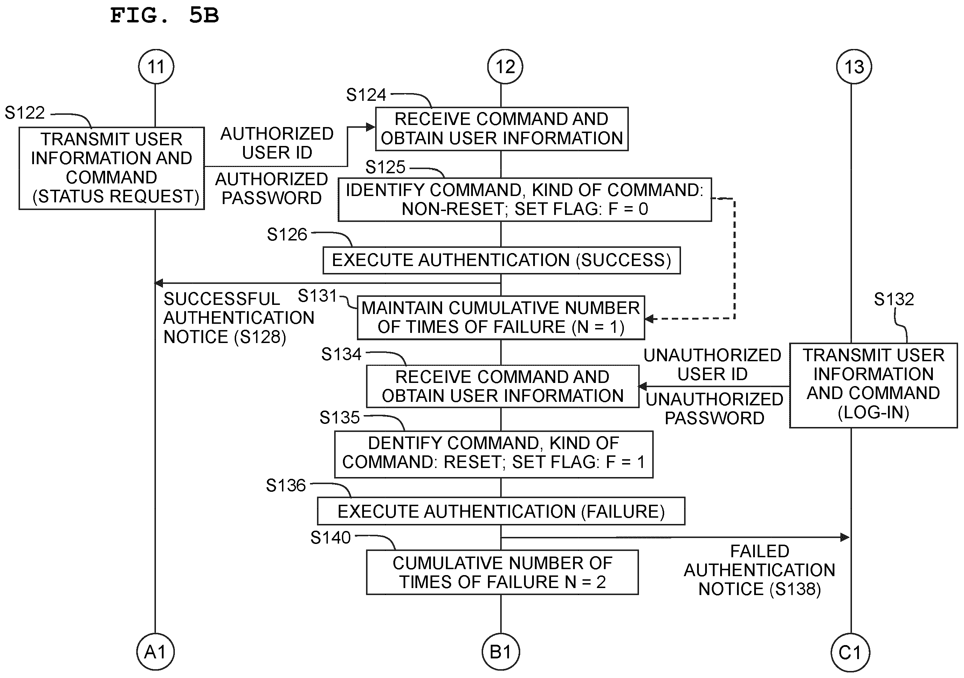

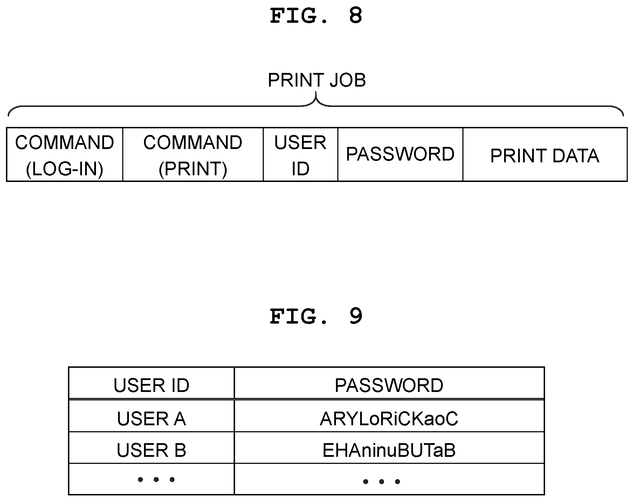

The memory 215 stores various kinds of programs 220 and various kinds of data 230. The various kinds of programs 220 include, for example, an authentication processing program of executing the control content of the multifunction peripheral 200 according to a sequence charts depicted in FIG. 5A to FIG. 7B which will be described later. The various kinds of data 230 include, for example, a memory table (see FIG. 9) which will be described later, and image data as the object of printing.

The controller 210 is an apparatus which performs data processing, and which is, for example, a processor such as a CPU. The controller 210 executes various kinds of programs stored in the memory 215. The controller 210 is an example of an arithmetic part. The displaying part 240 is, for example, a liquid crystal display, etc., and is capable of displaying various kinds of information. The operating part 250 is, for example, a keyboard, a button, etc., and receives input of operation by the user. The user can input various kinds of instructions to the multifunction peripheral 200 by operating the operating part 250. The communicating part 260 is connected to the network NT and performs communication with the operation terminals 300A and 300B. The printing part 270 prints an image on a printing sheet by, for example, the ink-jet system or the laser system, while conveying the printing sheet with a non-illustrated conveyor. The printing sheet is an example of a printing medium.

### Operation Terminal

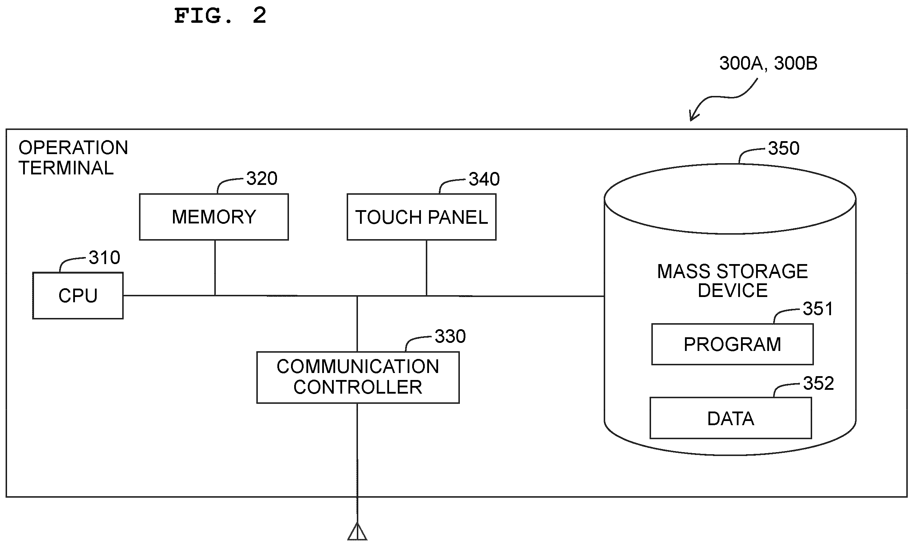

FIG. 2 depicts an example of the configuration of the operation terminals 300A and 300B. Each of the operation terminals 300A and 300B is a terminal device for operating the multifunction peripheral 200. Each of the operation terminals 300A and 300B is a mobile terminal, e.g., a smartphone possessed by the user, and is connected to the network NT via, for example, wireless communication. As depicted in FIG. 2, each of the operation terminals 300A and 300B has a CPU 310, a memory 320, and a communication controller 330 configured to be connected to the network NT via the wireless communication, a touch panel 340, and a mass storage device 350.

The mass storage device 350 is, for example, a flash memory, and the mass storage device 350 stores various kinds of programs 351 and various kinds of data 352. The CPU 310 executes the various kinds of programs 351 stores in the mass storage device 350. The CPU 310 executes various kinds of processes including data communication with respect to the multifunction peripheral 200 connected to the network NT.

The operation terminal 300 displays various kinds of information and accepts various kinds of operations by the user with the touch panel 340 in which a liquid crystal display and a touch pad are integrally combined. The user can input various kinds of instructions into the operation terminal 300 by operating the touch panel 340.

Note that another information terminal including, for example, a tablet computer, a notebook PC, and a desktop PC, may be used as the operation terminal 300, rather than the mobile terminal.

### Execution of User Authentication in Multifunction Peripheral

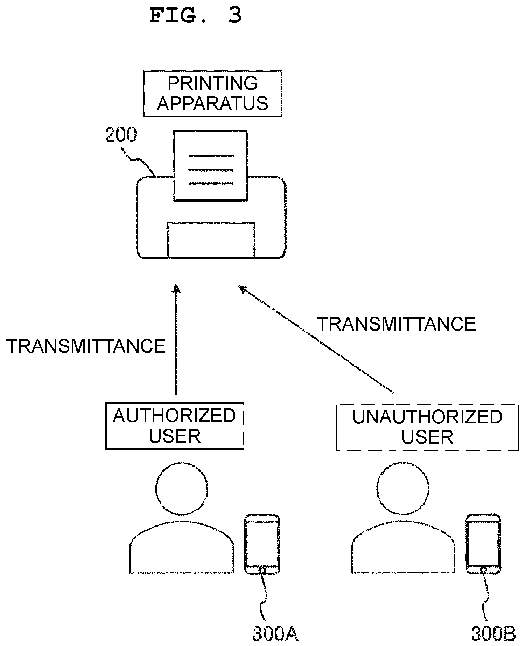

In the case of a system wherein the plurality of operation terminals 300 can access the multifunction peripheral 200 as described above, the multifunction peripheral 200 performs authentication of a user related to the operation terminal 300 which has accessed the multifunction peripheral 200, from the viewpoint of ensuring security, in some cases. In a case where the authentication succeeds, the multifunction peripheral 200 performs an appropriate image process in response to a command from the operation terminal 300, that is, a reading process or a printing process, etc. By performing the authentication, even in a case where both the operation terminal 300A of the authorized user and the operation terminal 300B of the unauthorized user not having authority to execute the printing as described above can be connected to the multifunction peripheral 200, for example as depicted in FIG 3, any printing with respect to the unauthorized access from the operation terminal 300B can be denied.

### Lockout

Specifically, in a case where a cumulative value of the number of times of failure in user authentication becomes a predetermined number of times or more due to, for example, the command using the unauthorized user information from the operation terminal 300B and transmitted repeatedly, the multifunction peripheral 200 rejects further user authentication for a predetermined period, namely, the multifunction peripheral 200 executes a so-called lockout. Note that the operation terminal 300A of the authorized user is hereinafter referred to as "authorized terminal 300A" and the operation terminal 300B of the unauthorized user is hereinafter referred to as "unauthorized terminal 300B", as appropriate. Further, the cumulative value of the number of times of failure in user authentication is hereinafter simply referred to as a "cumulative number of times of failure", as appropriate. Generally, in a case where the multifunction peripheral 200 executes the lockout and where the authentication succeeds with respect to access from the authorized terminal 300A before the cumulative failures reach the above-described predetermined number of times, the count of the cumulative failures is reset or initialized.

### Problem in Lockout

However, in the case of the lockout technique as described above, the following problem arises. Namely, for example, in such a case where the authentication succeeds in the multifunction peripheral 200 in a short interval due to the command using authorized user information and transmitted from the authorized terminal 300 A in a short interval as in such a case, for example, where polling is periodically performed from the authorized terminal 300A, the count of cumulative number of times of failure as described above is reset every time the authentication succeeds. Therefore, in a situation where the authentication succeeds in the multifunction peripheral 200 in the short interval, even in a case where the multifunction peripheral 200 is attacked by the unauthorized terminal 300B with, for example, a brute force attack on the password, the lockout might not function properly and the effectiveness of lockout might be lowered.

### Comparative Example

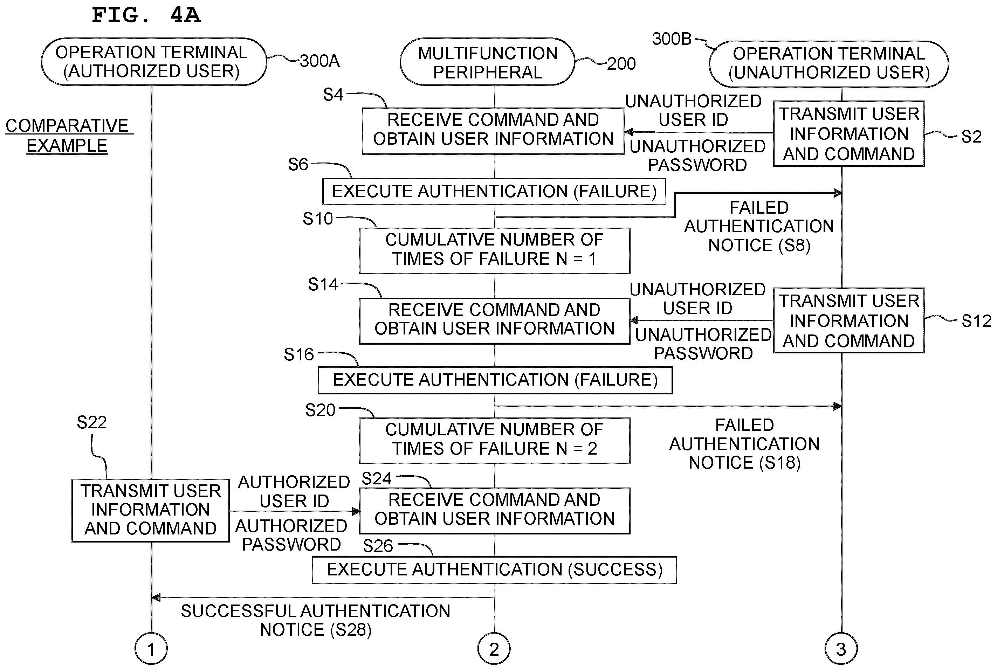

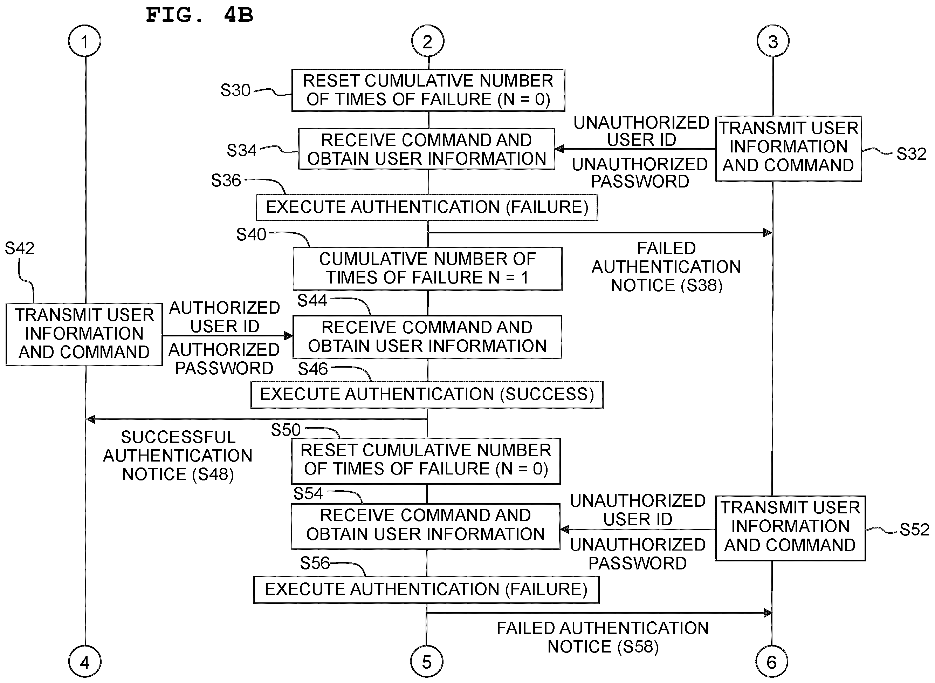

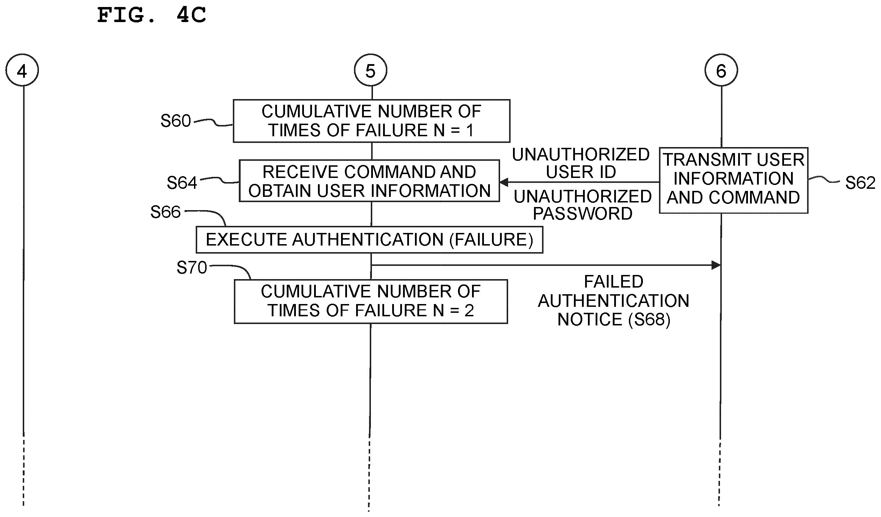

The above-described problem will be described more specifically, by a comparative example indicated in FIGs. 4A to 4C. FIGs. 4A to 4C depict a sequence flow of a control process executed by the CPU 310 of the authorized terminal 300A, the CPU 310 of the unauthorized terminal 300B, and the controller 210 of the multifunction peripheral 200 in a cooperative manner. Note that in this comparative example, a case where the above-described predetermined number of times of the cumulative failures based on which the lockout is to be executed is set to three times will be described as an example. Note that the above-described predetermined number of times, which is three times in this example, is an example of a predetermined threshold.

In FIG. 4A, the unauthorized terminal 300B transmits, for example in step S2, a command by using user information including an unauthorized user ID and an unauthorized password which are not the ID and the password of the authorized user. The multifunction peripheral 200 receives the command and obtains the user information in step S4. In step S6, the multifunction peripheral 200 executes the authentication, and determines whether the user ID and the password of the user information obtained in step S4 are the ID of the authorized user (hereinafter referred to as "authorized user ID") and the password of the authorized user (hereinafter referred to as "authorized password).

Since the command using the unauthorized user information from the unauthorized terminal 300B as described above results in the failure of authentication, the multifunction peripheral 200 transmits, in step S8, a failed authentication notice to the unauthorized terminal 300B. Based on the failure of authentication, the multifunction peripheral 200 increases, in step S10, the count of a cumulative failures N by one; in this example, N=1 holds.

In step S12, the unauthorized terminal 300B transmits a command by using the user information including the unauthorized user ID and the unauthorized password. The multifunction peripheral 200 receives the command and obtains the user information in step S14. In step S16, the multifunction peripheral 200 executes the authentication with respect to the user ID and the password obtained in step S14, but the authentication fails in step S16; the multifunction peripheral 200 transmits the failed authentication notice in step S18 based on the failed authentication; and the multifunction peripheral 200 increases the count of the cumulative failures N by one in step S20 so that N=2 holds. Since the cumulative failures which results in the lockout is N=3 in this example as described above, the multifunction peripheral 200 does not execute the lockout at the time when the count of the unauthorized accesses from the unauthorized terminal 300B is two times.

In a state that N=2 holds and that the lockout is not being executed, the authorized terminal 300A transmits a command by using the user information including the authorized user ID and the authorized password in step S22. The multifunction peripheral 200 receives the command and obtains the user information in step S24. In a case where the multifunction peripheral 200 executes the authentication in step S26, the authentication succeeds based on the authorized user ID and the authorized password obtained in step S24, and the command from the authorized terminal 300A is validated. The multifunction peripheral 200 executes a process according to the command. The multifunction peripheral 200 transmits a successful authentication notice to the authorized terminal 300A in step S28, and resets the cumulative failures N in step S30 so that N=0 holds.

In a state that N=0 holds, the unauthorized terminal 300B transmits, for example in step S32, a command by using the user information including the unauthorized user ID and the unauthorized password. The multifunction peripheral 200 receives the command and obtains the user information in step S34. In step S36, the multifunction peripheral 200 executes the authentication with respect to the user ID and the password obtained in step S34; the multifunction peripheral 200 transmits the failed authentication notice based on the failure of authentication in step S38; and the multifunction peripheral 200 increases the count of the cumulative failures N by one in step S40 so that N=1 holds. Since N=1 holds, the multifunction peripheral 200 does not execute the lockout.

In a state that N=1 holds and that the lockout is not being executed, the authorized terminal 300A transmits a command by using the user information including the authorized user ID and the authorized password again in step S42. The multifunction peripheral 200 receives the command and obtains the user information in step S44. In a case where the multifunction peripheral 200 executes the authentication in step S46, the authentication succeeds based on the authorized user ID and the authorized password obtained in step S44, and the command from the authorized terminal 300A is validated. The multifunction peripheral 200 executes a process according to the command. The multifunction peripheral 200 transmits the successful authentication notice to the authorized terminal 300A in step S48, and resets the cumulative failures N again in step S50 so that N=0 holds.

In a state that N=0 holds, the unauthorized terminal 300B transmits, for example, in step S52, a command by using the user information including the unauthorized user ID and the unauthorized password. The multifunction peripheral 200 receives the command and obtains the user information in step S54. In step S56, the multifunction peripheral 200 executes the authentication with respect to the user ID and the password obtained in step S54, but the authentication fails in step S56; the multifunction peripheral 200 transmits the failed authentication notice based on the failure of authentication in step S58; and the multifunction peripheral 200 increases the count of the cumulative failures N by one in step S60 so that N=1 holds. Since N=1 holds, the multifunction peripheral 200 does not execute the lockout, in a similar manner to the situation as described above.

Further in step S62, the unauthorized terminal 300B transmits a command by using the user information including the unauthorized user ID and the unauthorized password. The multifunction peripheral 200 receives the command and obtains the user information in step S64. In step S66, the multifunction peripheral 200 executes the authentication with respect to the user ID and the password obtained in step S64, but the authentication fails in step S66; the multifunction peripheral 200 transmits the failed authentication notice based on the failure of authentication in step S68; and the multifunction peripheral 200 increases the count of the cumulative failures N by one in step S70 so that N=2 holds. Since N=2 holds, the multifunction peripheral 200 does not execute the lockout at this time, in a similar manner to the situation as described above.

As described above, in this comparative example, due to the transmission, from the authorized terminal 300A, of the command using the authorized user information, the authentication succeeds in the multifunction peripheral 200 in a short interval. Every time the authentication succeeds in the multifunction peripheral 200, the count of the cumulative failures N is reset (step S30, step S50). As a result, even in a case where the unauthorized terminal 300B transmits the command using the unauthorized user information three times, respectively, in step S2, step S12 and step S32, the lockout is not functioning; in step S56 and step S66, the multifunction peripheral 200B executes the authentication also with respect to the command from the unauthorized terminal 300B using the unauthorized user information, transmitted in step S52 and step S62 following step S32. In a case where the user information transmitted from the unauthorized terminal 300B in each of step S52 and step S62 accidentally matches the authorized user information, the authentication succeeds. In such a case, the multifunction peripheral 200 consequently executes a process according to the command from the unauthorized terminal 300B, and thus the effectiveness of lockout is compromised.

### Feature of Embodiment

In order to address the above-described problem, in the present embodiment, even in a case where the authentication in the multifunction peripheral 200 succeeds with respect to the transmission of the command using the authorized user information from the authorized terminal 300A, the multifunction peripheral 200 maintains the value of the cumulative failures N, without resetting the value of the cumulative failures N to 0 (zero), in a case where a previously determined specific condition is satisfied. The CPU 310 of authorized terminal 300A, the CPU 310 of the unauthorized terminal 300B, and the controller 210 of the multifunction peripheral 200 of the present embodiment cooperate to execute a control process so as to realize this technique. The control process will be described with reference to a sequence flow indicated in FIG. 5A to FIG. 7B.

In FIG. 5A, the authorized terminal 300A transmits, for example in step S102, a log-in command by using the user information including the ID and the password of the authorized user. The multifunction peripheral 200 receives the command and obtains the user information in step S104. The user ID and the password included in the user information obtained in step S 104 are an example of first user information.

FIG. 8 depicts an example of the content of transmission from the authorized terminal 300A to the multifunction peripheral 200 in step S102. In this example, the above-described log-in command is included in a print job. The print job also includes, for example, a print command, the user ID, the password, and print data, in addition to the log-in command. The user ID is an example of user identification information.

Referring back to FIG. 5A, the multifunction peripheral 200 identifies, in step S105, the kind of the command received in step S104. In the present embodiment, the previously determined specific condition as described above is that the received command is of a specific kind previously determined, and in this example, the received command is a status request command. In a case where the received command is the status request command, the multifunction peripheral 200 maintains the value of the cumulative failures N, without resetting the value of the cumulative failures N to 0 (zero). In the present embodiment, a flag F indicating that the kind of the received command is a kind of command regarding which the value of the cumulative failures N is to be reset to 0. In a case where the received command is the log-in command as described above, the received command is of the kind regarding which the value of the cumulative failures N is to be reset to 0. Accordingly, the multifunction peripheral 200 sets the flag F to 1 in step S105.

In step S106, the multifunction peripheral 200 executes the authentication to determine whether the user ID and the password of the user information obtained in step S 104 are the authorized user ID and the authorized password. The memory 215 stores the authorized user ID and the authorized password related to the multifunction peripheral 200 in advance. The memory 215 stores the authorized user ID and the authorized password associated with each user, for example, in the form of a memory table as depicted in FIG. 9. The multifunction peripheral 200 reads out the stored authorized user ID and authorized password in step S106. The authorized user ID and the authorized password stored in the memory 215 are an example of second user information. The multifunction peripheral 200 performs the above-described determination by comparing the authorized user ID and the authorized password read out from the memory 215 with the user ID and the password of the user information obtained in step S104.

With respect to the above-described command using the authorized user information from the authorized terminal 300A, the authentication succeeds, and the multifunction peripheral 200 transmits the successful authentication notice to the authorized terminal 300A in step S108. Based on the successful authentication, the multifunction peripheral 200 executes a process according to the log-in command, for example, the printing process or the reading process. In step S110, the multifunction peripheral 200 resets the count of the cumulative failures N according to the setting of the flag F to 1 (F=1) in step S105 (see the broken lines).

In a state that N=0 holds, for example, in step S112, the unauthorized terminal 300B transmits a log-in command by using the user information including the unauthorized user ID and the unauthorized password. The multifunction peripheral 200 receives the command and obtains the user information in step S114. In step S115, the multifunction peripheral 200 sets the above-described flag F to 1, according to the kind of the received command which is the log-in command.

In step S116, the multifunction peripheral 200 executes the authentication, in a similar manner to the authentication as described above, with respect to the user ID and the password obtained in step S114. Since the command using the unauthorized user information from the unauthorized terminal 300B as described above results in the failure of authentication, the multifunction peripheral 200 transmits, in step S118, the failed authentication notice to the unauthorized terminal 300B. Based on the failed authentication, in step 5, the multifunction peripheral 200 increases the count of the cumulative failures N by one so that N=1 holds.

In a state that N=1 holds, the authorized terminal 300A transmits the status request command requesting the status of the multifunction peripheral 200 by using the user information including the authorized user ID and the authorized password in step S122. The multifunction peripheral 200 receives the command and obtains the user information in step S124. In step S125, the multifunction peripheral 200 sets the flag F to 0, according to the kind, of the received command received in step S124, which is the status request command and regarding which the value of the cumulative failures N is not to be reset to 0.

In step S126, the multifunction peripheral 200 executes the authentication, and the authentication succeeds based on the authorized user ID and the authorized password obtained in step S124. The multifunction peripheral 200 executes a process according to the status request command, such as a process of transmitting information on the status of the multifunction peripheral 200 itself, such as sheet remaining amount, printing agent remaining amount, etc., to the authorized terminal 300A. The multifunction peripheral 200 transmits the successful authentication notice to the authorized terminal 300A in step S128, and the multifunction peripheral 200 confirms the flag F in step S131. Since the flag F is set to 0, the multifunction peripheral 200 maintains the cumulative failures N as being set to 1 (N=1), without resetting the cumulative failures N.

In the above-described comparative example, the cumulative failures N is unconditionally reset to 0 in the case where the authentication succeeds, as described above. On the other hand, in the present embodiment, in step S131, the multifunction peripheral 200 maintains N=1 as it is, according to the setting of the flag F=0 in step S125 (see broken lines).

In the state that N=1 holds, the unauthorized terminal 300B transmits, for example, in step S132, a log-in command by using the user information including the unauthorized user ID and the unauthorized password. The multifunction peripheral 200 receives the command and obtains the user information in step S134. In step S135, the multifunction peripheral 200 sets the above-described flag F to 1, according to the kind of the received command which is the log-in command. In step S136, the multifunction peripheral 200 executes the authentication, but the authentication fails in a case where the received log-in command is the command using the unauthorized user information from the unauthorized terminal 300B, and the multifunction peripheral 200 transmits the failed authentication notice to the unauthorized terminal 300B in step S138. Based on the failed authentication, the multifunction peripheral 200 increases the count of the cumulative failures N by one in step S140 so that N=2 holds. Since N=2 holds at this time, the multifunction peripheral 200 does not execute the lockout.

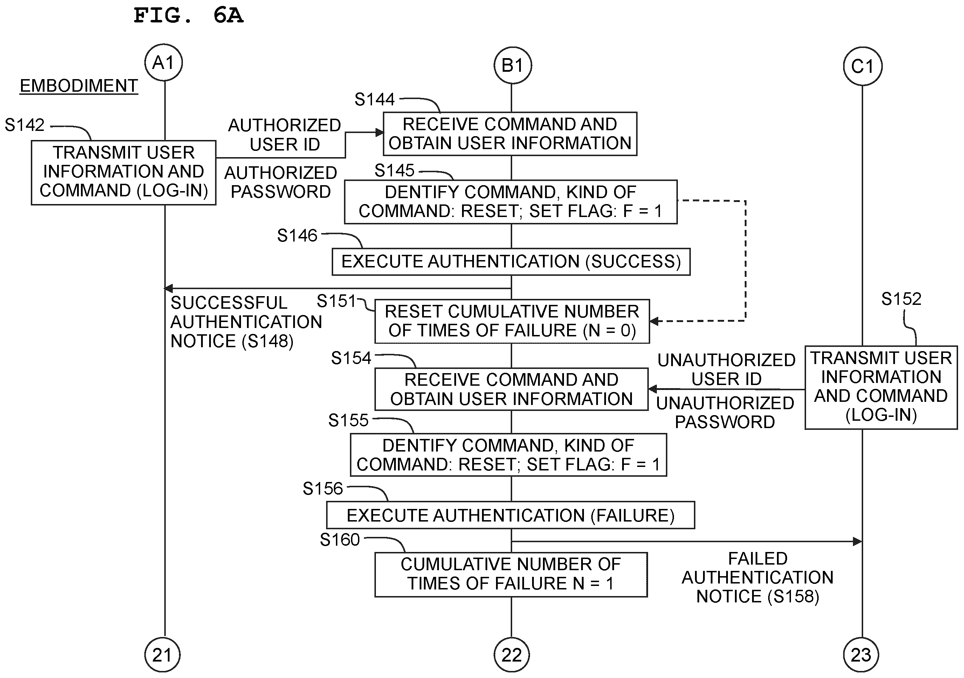

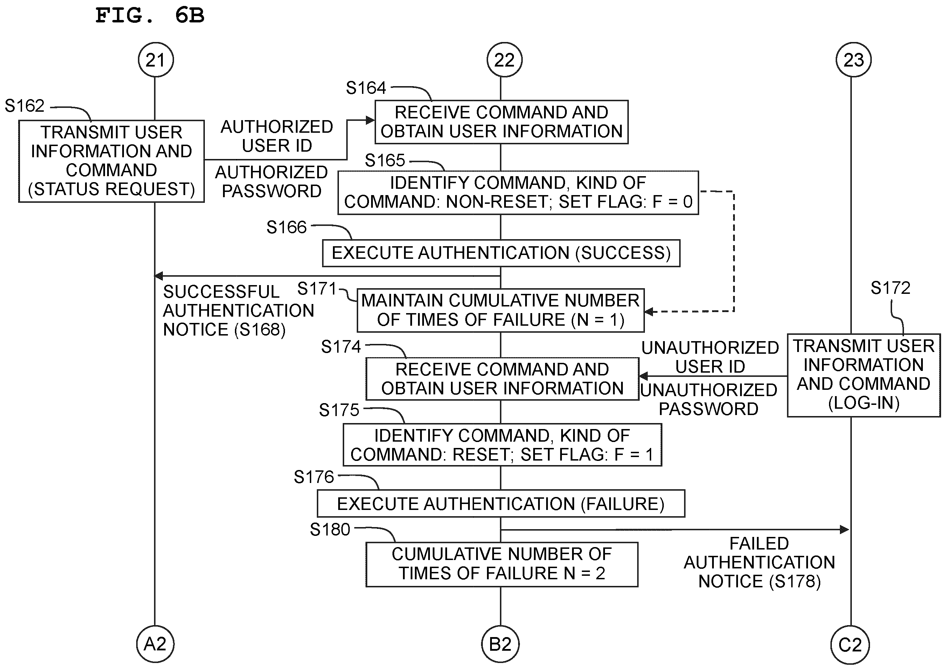

Proceeding to FIG. 6A, in a state that N=2 holds, the authorized terminal 300A transmits a log-in command by using the user information including the authorized user ID and the authorized password again in step S142. The multifunction peripheral 200 receives the command and obtains the user information in step S144. In step S145, the multifunction peripheral 200 sets the flag F to 1, according to the kind, of the command received in step S144 as described above, which is the log-in command and regarding which the value of the cumulative failures N is to be initialized or reset to 0.

In step S146, the multifunction peripheral 200 executes the authentication, and the authentication succeeds based on the authorized user ID and the authorized password obtained in step S144. The multifunction peripheral 200 executes a process according to the log-in command, for example, the printing process or the reading process. The multifunction peripheral 200 transmits the successful authentication notice to the authorized terminal 300A in step S148. In step S151, the multifunction peripheral 200 resets the count of the cumulative failures N to 0 (N=0) according to the setting of the flag F to 1 (F=1) in step S145 (see broken lines).

In a state that N=0 holds, the unauthorized terminal 300B transmits, for example, in step S152, a log-in command by using the user information including the unauthorized user ID and the unauthorized password. The multifunction peripheral 200 receives the command and obtains the user information in step S154. In step S155, the multifunction peripheral 200 sets the above flag F to 1, according to the kind of the received command which is the log-in command. In step S156, the multifunction peripheral 200 executes the authentication, but the authentication fails in a case where the received log-in command is the command using the unauthorized user information from the unauthorized terminal 300B, and the multifunction peripheral 200 transmits the failed authentication notice to the unauthorized terminal 300B in step S158. Based on the failed authentication, in step S160, the multifunction peripheral 200 increases the count of the cumulative failures N by one, from the above-described N=0, so that N=1 holds.

In a state that N=1 holds, the authorized terminal 300A transmits the status request command by using the user information including the authorized user ID and the authorized password again in step S162. The multifunction peripheral 200 receives the command and obtains the user information in step S164. In step S165, the multifunction peripheral 200 sets the flag F to 0, according to the kind, of the command received in step S164 as described above, which is the status request command and regarding which the value of the cumulative failures N is not to be reset to 0.

In step S166, the multifunction peripheral 200 executes the authentication, and the authentication succeeds based on the authorized user ID and the authorized password obtained in step S164. The multifunction peripheral 200 transmits the successful authentication notice to the authorized terminal 300A in step S168. In step S171, the multifunction peripheral 200 maintains the cumulative failures N as it is, without resetting the cumulative failures N to 0, according to the setting of the flag F to 0 (F=0) in step S165 (see the broken lines).

In a that N=1 holds, the unauthorized terminal 300B transmits, for example, in step S172, a log-in command by using the user information including the unauthorized user ID and the unauthorized password. The multifunction peripheral 200 receives the command and obtains the user information in step S174. In step S175, the multifunction peripheral 200 sets the above flag F to 1 (F=1) according to the kind of the received command which is the log-in command. In step S176, the multifunction peripheral 200 executes the authentication, but the authentication fails in a case where the received log-in command is the command using the unauthorized user information from the unauthorized terminal 300B, and the multifunction peripheral 200 transmits the failed authentication notice to the unauthorized terminal 300B in step S178. Based on the failed authentication, in step S180, the multifunction peripheral 200 increases the count of the cumulative failures N by one, from the above-described N=1, so that N=2 holds. Since N=2 holds, the multifunction peripheral 200 does not execute the lockout.

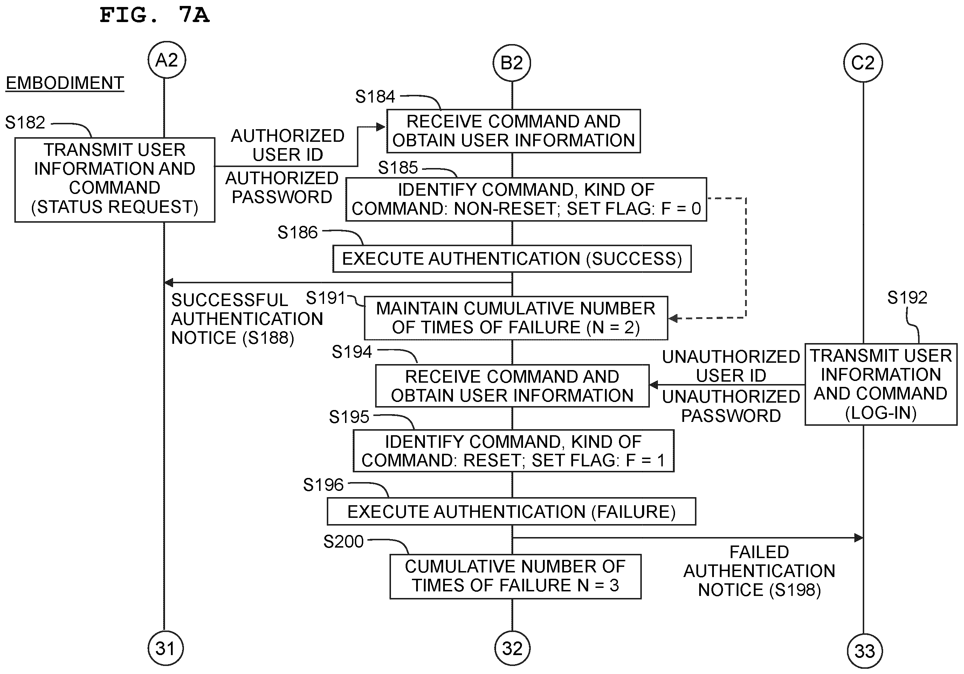

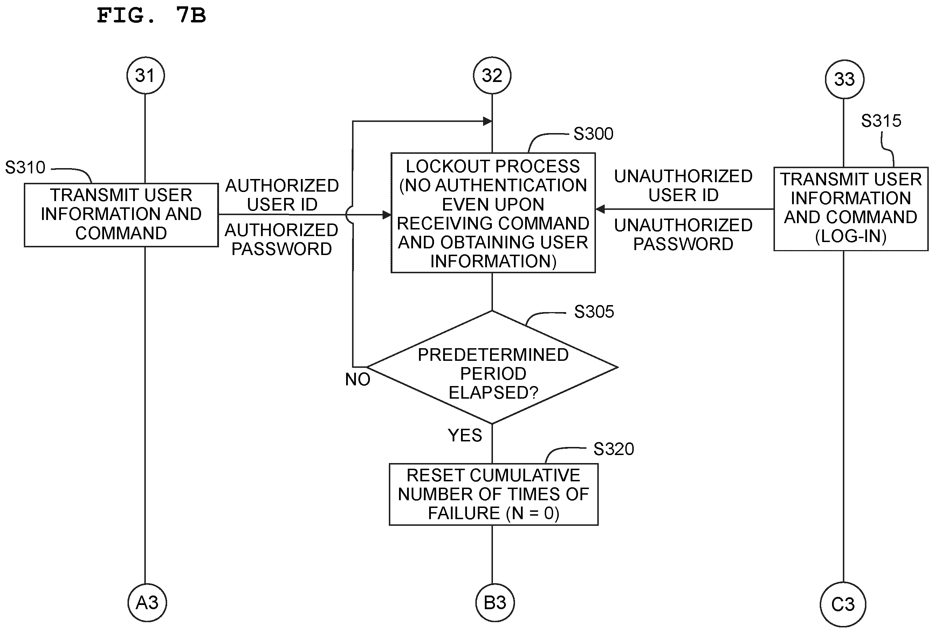

Proceeding to FIG. 7A, in a state that N=2 holds, the authorized terminal 300A transmits a status request command by using the user information including the authorized user ID and the authorized password again in step S182. The multifunction peripheral 200 receives the command and obtains the user information in step S184. In step S185, the multifunction peripheral 200 sets the flag F to 0, according to the kind, of the command received in step S184 as described above, which is the status request command and regarding which the value of the cumulative failures N is not to be reset to 0.

In step S186, the multifunction peripheral 200 executes the authentication, and the authentication succeeds based on the authorized user ID and the authorized password obtained in step S184. The multifunction peripheral 200 transmits the successful authentication notice to the authorized terminal 300A in step S188. In step S191, the multifunction peripheral 200 maintains the cumulative failures N set to 2 (N=2) as it is, without resetting (the value of) the cumulative failures N to 0, according to the setting of the flag F to 0 (F=0) in step S185 (see the broken lines).

In a state that N=2 holds, the unauthorized terminal 300B transmits, for example, in step S192, a log-in command by using the user information including the unauthorized user ID and the unauthorized password. The multifunction peripheral 200 receives the command and obtains the user information in step S194. In step S195, the multifunction peripheral 200 sets the above flag F to 1 (F=1) according to the kind of the received command which is the log-in command. In step S196, the multifunction peripheral 200 executes the authentication, but the authentication fails in a case where the received log-in command is the command using the unauthorized user information from the unauthorized terminal 300B, and the multifunction peripheral 200 transmits the failed authentication notice to the unauthorized terminal 300B in step S198. Based on the failed authentication, in step S200, the multifunction peripheral 200 increases the count of the cumulative failures N by one, from the above-described N=2, so that N=3 holds.

In step S300, the multifunction peripheral 200 executes a lockout process according to the cumulative failures N which has reached 3 (N=3) in step S200. Specifically, in this example, in a case where the authorized terminal 300A transmits, for example in step S310, a command by using the user information including the authorized user ID and the authorized password, the multifunction peripheral 200 receives the command and obtains the user information, but does not perform the above-described authentication. Similarly, also in a case where the unauthorized terminal 300B transmits, for example, in step S315, a command by using the user information including the unauthorized user ID and the unauthorized password, the multifunction peripheral 200 receives the command and obtains the user information, but does not perform the above-described authentication.

The multifunction peripheral 200 continues the above-described lockout process started in step S300 until a predetermined period elapses after the start of the lockout process and a determination in step S305 as to whether the predetermined period has elapsed is "YES"; even in a case where any operation terminal 300 transmits a command by using the user information to the multifunction peripheral 200, although the multifunction peripheral 200 receives the command and obtains the user information, the multifunction peripheral 200 does not execute the authentication. In a case where the predetermined period has elapsed after the start of the lockout process and where the determination in step S305 is "YES", the multifunction peripheral 200 resets, in step S320, the count of the cumulative failures N to 0 (N=0) from N=3. Then, the multifunction peripheral 200 returns the process to step S104 of FIG. 5A.

Note that the procedures as indicated in, respectively, FIG. 5A to FIG. 7B, each of steps S104, S114, S124, S134, S144, S154, S164, S174, S184 and S194 is an example of an information obtaining step, and the process executed in each of steps S104, S114, S124, S134, S144, S154, S164, S174, S184 and S194 is an example of an information obtaining process. Each of steps S106, S116, S126, S136, S146, S156, S166, S176, S186 and S196 is an example of an authenticating step, and the process executed in each of steps S106, S116, S126, S136, S146, S156, S166, S176, S186 and S196 is an example of an authentication process. Each of steps S120, S140, S160, S180, and S200 is an example of a counting step, and the process executed in each of steps S120, S140, S160, S180, and S200 is an example of a counting process.

Each of steps S300 and S305 is an example of a restricting step, and the process executed in each of steps S300 and S305 is an example of a restricting process. Each of steps S131, S151, S171, and S191 is an example of a number controlling step, and the process executed in each of steps S131, S151, S171, and S191 is an example of a number controlling process.

### Effects of Embodiment

As explained above, in the present embodiment, the controller 210 of the multifunction peripheral 200 obtains the user information from the operation terminal 300 in each of steps S104, S114, S124, S134, S144, S154, S164, S174, S184, and S194. By using the user information obtained from the operation terminal 300, the controller 210 executes the authentication in each of steps S106, S116, S126, S136, S146, S156, S166, S176, S186, and S196. In a case where the authentication fails, the controller 210 counts the cumulative failures N in each of steps S120, S140, S160, S180, and S200. The controller 210 counts the cumulative failures N each time the authentication fails with respect to the unauthorized user information. In a case where the authentication fails repeatedly, the controller 210 continuously counts the cumulative failures N; in a case where the cumulative failures N equals or exceeds the predetermined threshold, which is three or more in the above-described example, the controller 210 restricts the successful authentication by executing the lockout process in step S300.

In a state that the cumulative failures N, which is less than the threshold, is being counted, i.e., in a state that although the authentication fails but the successful authentication is not restricted yet and in a case where the authentication using the user information obtained from the operation terminal 300 succeeds, the controller 210 performs either one of the different processes depending on whether the previously determined specific condition is satisfied. In a case where the specific condition is not satisfied, the controller 210 resets, in step S151, the cumulative failures N counted as described above, in a similar manner as in the known technique. In a case where the specific condition is satisfied, the controller 210 maintains, in each of steps S131, S171, and S191, the counted cumulative failures N, without resetting the counted cumulative failures N, unlike the known technique.

In the present embodiment, by setting the above-described specific condition, the cumulative failures N is not reset in some cases even in a case where the authentication succeeds with respect to transmittance of the command using the user information from the authorized terminal 300A of the user with due authorization, immediately before the attack from the unauthorized terminal 300B of the malicious third person (see steps S131, S171, and S191 as described above). Therefore, in a case where the unauthorized terminal 300B attacks the multifunction peripheral 200 by changing the user information randomly and by transmitting commands repeatedly by using the user information for a short period, such a possibility is increased that the cumulative failures N might reach the threshold due to the repeated failure of the authentication, which in turn increases such a possibility that the controller 210 might execute the lockout process in step S300. Therefore, the success of authentication by the unauthorized terminal 300B can be effectively restricted. According to the present embodiment, the effectiveness of lockout against the malicious third person can be improved.

Further, in the present embodiment, in particular, the memory 215 stores, in advance, the user information related to the user with due authorization. The controller 210 compares, in each of steps S106, S116, S126, S136, S146, S156, S166, S176, S186, and S196, the user information stored by the memory 215 and the user information obtained in each of steps S104, S114, S124, S134, S144, S154, S164, S174, S184, and S194 so that the authentication can be executed smoothly.

Note that another technique may also be adopted, other than the above-described technique of comparing the user information obtained from the operation terminal 300 with the user information stored in the memory 215. For example, the user information received from the operation terminal 300 may be transmitted to the authenticating server 400 depicted in FIG. 1; the authenticating server 400 may execute authentication and may transmit the result of authentication to the multifunction peripheral 200. In this case, the multifunction peripheral 200 may receive information on the result as to whether the authentication has succeeded or failed in the authenticating server 400, in each of steps S106, S116, S126, S136, S146, S156, S166, S176, S186 and S196, so that the result of the success or failure of the authentication can be reflected in subsequent processes.

Further, in the present embodiment, particularly in such a case where the user information is received from the operation terminal 300 and where the command received from the operation terminal 300 is a command of the previously determined specific kind, the specific condition is satisfied. In a case where the command is the status request command of the multifunction peripheral 200 as described above, the controller 210 does not reset the cumulative failures N in each of steps S131, S170, and 191. According to the present embodiment, by restricting the reset of the cumulative failures N in such a situation that the authentication succeeds repeatedly for a short period with respect to the commands with the user information received from the authorized terminal 300A and that the cumulative failures N is reset each time the authentication succeeds, the lockout can function effectively against the attack from the unauthorized terminal 300B by the malicious third person. As a result, the success of authentication by the unauthorized terminal 300B can be effectively restricted.

Furthermore, other than the above-described specific condition being satisfied based on the kind of the command, the specific condition may also be satisfied in a case where the authentication succeeds a predetermined number of times or more within a predetermined period by the commands received when the user information is obtained from the operation terminal 300. In this situation, in a case where the success of authentication is found to be repeated for a short period by the received commands, the controller 210 does not reset the cumulative failures N in each of steps S131, S151, S171 and S191 in response to the above-described situation. Also in this case, in a similar manner as in the foregoing case, the lockout can function effectively against the attack from the malicious third person by restricting the cumulative failures N from being reset every time the authentication succeeds repeatedly for the short period. As a result, the success of authentication by the unauthorized terminal 300B can be effectively restricted.

Moreover, in the present embodiment, the controller 210 restricts, in particular, the execution of the authentication process, such as in each of steps S106, S116, S126, S136, S146, S156, S166, S176, S186, and S196, in the lockout process in step S300. According to the present embodiment, by restricting the execution of the authentication process, the successful authentication can be restricted.

Further, in the process of each of steps S300 and S305, the procedure is not limited to the above-described technique of receiving the command from the operation terminal 300 and obtaining the user information, but not executing the authentication for the predetermined period with respect to any operation terminal 300. For example, in step S300, the controller 210 may confirm whether the user account corresponding to the user ID obtained from the operation terminal 300 in each of steps S104, S114, S124, S134, S144, S154, S164, S174, S184, and S194 is locked. Further, in a case where the user account is locked, the multifunction peripheral 200 may reject the authentication corresponding to the user ID, without identifying the password, for the predetermined period.

Further, other than the technique as described above, the following technique may be adopted as another technique of restricting the success of authentication in each of steps S300 and S305 as described above.
(a) The multifunction peripheral 200 does not obtain the user information from the operation terminal 300 for the predetermined period so as not to execute the authentication indirectly.
(b) In each case where the multifunction peripheral 200 receives a command and executes the authentication with respect to the command and where the authentication fails, the multifunction peripheral 200 stores the user information each time. Further, in a case where the cumulative failures N reaches the predetermined threshold, and where the counted number of authentication failures have been received from the operation terminal 300 of the same user, the multifunction peripheral 200 determines that either the authorized user might forget his or her password, or the multifunction peripheral 200 might be attacked by the unauthorized user who has obtained the name of the authorized user, and the multifunction peripheral 200 does not execute the authentication associated with the user for a predetermined period.
(c) In the case of (b) as described above, instead of restricting the execution of the authentication process, or in addition to restricting the execution of the authentication process, the multifunction peripheral 200 clears the password of the user and transmits, for example, a notice indicating "the password has been cleared. Please reset the password" to the operation terminal 300 associated with the user. Alternatively, the multifunction peripheral 200 may transmit a notice urging the authorized terminal 300A of the authorized user to change the user information. In either case, the authorized user is made aware that a malicious third person might have attacked the authorized terminal 300 of the user, and the authorized user has an opportunity to change the password and the user information so as to ensure security. Thus, for example, in response to the attack by the unauthorized user who has obtained the authorized user name, the authorized user is highly likely to change the user name, which in turn enables to restrict the success of authentication by the unauthorized user.
(d) In a case where, with respect to multiple user information which are obtained by the multifunction peripheral 200 from the operation terminal(s) 300, in the reception of commands each of which uses one of the multiple user information and which are repeated a plurality of times until the cumulative failures N reaches the threshold, the passwords are different whereas the user name is the same in the multiple user information, the multifunction peripheral 200 determines whether these passwords satisfy a predetermined regularity. In a case where the passwords satisfy the regularity, the multifunction peripheral 200 identifies the operation terminal 300 corresponding to the user name in step S300, and prohibits the execution of the authentication process with respect to the identified operation terminal 300. This procedure has the following significance.

In a case where, for example, regarding multiple user information, which are obtained by the multifunction peripheral 200 during the reception of commands each of which uses one of the multiple user information and which are repeated a plurality of times until the cumulative failures N reaches the threshold, the user name in the multiple user information is the same whereas the passwords are different simply in one digit and are same in other digits, a malicious third person is highly likely to be launching the brute force attack on the password. In response to this, in a case where the passwords satisfy a previously determined regularity, the controller 210 identifies, in step S300, the operation terminal 300 corresponding to the user name, and prohibits the execution of authentication with respect to the identified operation terminal 300. With this, the malicious third person can be identified and any unauthorized use of the multifunction peripheral 200 by the malicious third person can be denied in an ensured manner, whereas the authorized user can continue to use the multifunction peripheral 200. Note that in a case where the passwords satisfy the above-described regularity, the authorized user might mistake, for example, the password by one digit repeatedly. In a case where such a mistake by the authorized user is possible, the multifunction peripheral 200 may not count such a mistake into the cumulative failures N.

### Others

In the above-described embodiment, the case wherein the present invention is applied to the multifunction peripheral 200 including both the printing part 270 and the reading part 275 as the image processing part has been described. The present invention, however, is not limited to this. In other words, the present invention may be applied to a reading apparatus including simply the reading part 275 as the image processing part, a so-called scanner. The present invention may also be applied to a printing apparatus including simply the printing part 270 as the image processing part, a so-called printer. In these cases, the similar effect as described above can also be obtained.

The sequence charts indicated in FIG. 5A to FIG. 7B do not limit the present invention to the procedures indicated in the sequence charts. Any addition, deletion of the procedure(s), or change of order of the procedures are possible within the scope not departing from the spirit and the technical concept of the present invention.

Further, other than the foregoing description, the technique by the above-described embodiment and the technique of each of the modifications may be combined and used as appropriate.

Furthermore, although specific examples are not given, the present invention may be implemented with various modifications within the scope not departing from the spirit of the present invention.

### Reference Signs List:

200: multifunction peripheral (an example of image processing apparatus)
210: controller
215: memory
270: printing part (an example of the image processing part)
300A: operation terminal (an example of the external device)
300B: operation terminal (an example of the external device)
N: cumulative failures

## Claims

1. An image processing apparatus comprising an image processing part and a controller,
the controller that executes:
an information obtaining process of obtaining first user information;
an authentication process of performing authentication using the first user information obtained in the information obtaining process;
a counting process of incrementing the number of authentication failures when an authentication failure occurs in the authentication process;
a restricting process of restricting successful authentication in a case where the number of authentication failures equals or exceeds a predetermined threshold; and
a number controlling process, wherein
in a case where authentication using the first user information obtained in the information obtaining process is successful after the number of authentication failures has been incremented in the counting process, wherein the number of authentication failures has a value less than the predetermined threshold, the controller executes:
in a case where a predetermined specific condition is not satisfied, initializing the number of authentication failures; and
in a case where the predetermined specific condition is satisfied, retaining the number of authentication failures.

2. The image processing apparatus according to claim 1, further comprising a memory for storing second user information, wherein
in the authentication process, the controller executes the authentication by comparing the second user information stored in the memory with the first user information obtained in the information obtaining process.

3. The image processing apparatus according to claim 1 or 2, wherein
the specific condition is that a command received when the first user information is obtained in the information obtaining process is a command of a previously determined specific kind.

4. The image processing apparatus according to claim 1, 2 or 3, wherein
the specific condition is that the authentication has been successful a predetermined number of times or more within a predetermined period with a command received in a case where the first user information is obtained in the information obtaining process.

5. The image processing apparatus according to any of claims 1 to 4, wherein
the controller further restricts the successful authentication by restricting execution of the authentication process in the restricting process.

6. The image processing apparatus according to any of claims 1 to 5, wherein
the first user information includes user identification information and a password,
in the restricting process, the controller determines, based on the user identification information included in the first user information obtained in the information obtaining process, whether a user account corresponding to the user identification information is locked, and
in a case where the user account is locked, the controller rejects authentication corresponding to the user identification information for a predetermined period without identifying the password.

7. The image processing apparatus according to any one of claims 1 to 6, wherein
the image processing part is either a reading part that reads a reading object and generates an image corresponding to the reading object or an image forming part that forms an image on to a print medium.

8. An authentication processing program causing an arithmetic part, which is included in an image processing apparatus having an image processing part, to execute:
an information obtaining step of obtaining first user information;
an authentication step of performing authentication using the first user information obtained in the information obtaining step;
a counting step of incrementing the number of authentication failures when authentication failure occurs in the authentication step;
a restricting step of restricting successful authentication in a case where the number of authentication failures equals or exceeds a predetermined threshold; and
a number controlling step, wherein
in a case where authentication using the first user information obtained in the information obtaining step is successful after the number of authentication failures has been incremented in the counting step, wherein the number of authentication failures has a value less than the predetermined threshold, the controller executes:
in a case where a predetermined specific condition is not satisfied, initializing the number of authentication failures; and
in a case where the predetermined specific condition is satisfied, retaining the number of authentication failures.
